# DEMANDE DE BREVET EUROPEEN

(11) **EP 1 628 312 A2**
(43) Date de publication de la demande: **22.02.2006**
(21) Numéro de dépôt: 05300662.3
(22) Date de dépôt: 12.08.2005
(51) Int. Cl.: H01B 12/10

(54) **Conducteur composite à brins multifilamentaires supraconducteurs**

(30) Priorité: 17.08.2004 FR 0451860
(71) Demandeur: Nexans, 75008 Paris (FR)
(72) Inventeur: Bruzek, Christian-Eric, 59141, Thun St Martin (FR); Lallouet, Nicolas, 62132, Fiennes (FR)
(74) Mandataire: Lenne, Laurence

(57) **Abrégé**

L'invention concerne un conducteur composite à brins multifilamentaires supraconducteurs (1, 1') maintenus par soudure. Selon l'invention, lesdits brins sont assemblés les uns aux autres par une soudure continue (2, 2') sur toute leur longueur, cette soudure étant constituée d'un alllage à basse température de fusion.

## Description

La présente invention concerne un conducteur composite à brins multifilamentaires supraconducteurs, destiné en particulier à être enroulé pour la réalisation d'une bobine magnétique supraconductrice.

Il est connu de réaliser un brin supraconducteur multifilamentaire, en forme de fil ou de ruban, à gainage d'argent. Ce brin est généralement fabriqué grâce à des billettes remplies et étirées, mises en faisceau dans d'autres billettes elles-même étirées. Le brin multifilamentaire résultant peut subir les mêmes étapes, et ainsi de suite jusqu'au nombre de filaments par unité de surface voulu. Cet étirage peut se faire par laminage.

Un tel brin mulfifitamentaire peut être bobiné, afin de réaliser une bobine magnétique supraconductrice.

Cependant, ce bobinage pose les problèmes suivants.

Le brin multifilamentaire, qu'il soit en forme de fil ou de ruban, est fin et très fragile et la mise en oeuvre du bobinage s'avère très délicate, afin d'éviter une cassure du fil ou du ruban. A titre d'exemple, un tel ruban larniné peut présenter un rapport de sa largeur sur son épaisseur de l'ordre de 15 à 20.

De plus, le brin est de petite dimension et il en découle un certain nombre de tours de bobinage pour obtenir une bobine et donc une longueur de brin multifilamentaire et un temps de bobinage relativement importants.

Par ailleurs, il est connu du brevet US 6 339 047 de réaliser des câbles à plusieurs fils supraconducteurs par maintien de ces fils assemblés par soudure.

L'objet de l'invention est de fournir un supraconducteur composite permettant de résoudre ces problèmes techniques grâce à sa section relativement importante, ce supraconducteur présentant une solidité assurant une mise en oeuvre plus aisée du bobinage qui peut de plus être réalisé avec un nombre de tours limité ce qui rend cette mise en oeuvre optimale.

Pour ce faire, l'invention propose un conducteur composite à brins multifilamentaires supraconducteurs maintenus par soudure, caractérisé en ce que lesdits brins sont assemblés les uns aux autres par une soudure continue sur toute leur longueur, cette soudure étant constituée d'un alliage à basse température de fusion.

L'invention présente également l'avantage important suivant. En cas de défection d'un brin multifilamentaire du conducteur composite en fonctionnement en particulier dans une bobine magnétique, par exemple par cassure, le courant circule dans cette soudure, quel que soit le lieu de la défection, jusqu'au brin adjacent qui assure la continuité du passage de courant. Dans ce cas, il y a donc échange de courant entre brins et continuité de fonctionnement, ce qui permet également de shunter les parties de brins multifilamentaires présentant un plus faible courant critique sans limiter le point de fonctionnement de la bobine.

Des connexions électriques peuvent de plus facilement être reliées par brasure à ce conducteur composite présentant de façon inhérente grâce à cette soudure continue le matériau nécessaire à ces brasures.

Selon un mode de réalisation préféré, ladite soudure est obtenue par passage desdits brins assemblés dans un bain d'alliage.

Avantageusement, ledit alliage est un alliage d'étain.

Lesdits brins peuvent être constitués de filaments de Bi2212 dans une matrice d'argent.

Selon un premier mode de réalisation, lesdits brins sont des rubans plats supraconducteurs.

De préférence, lesdits brins sont superposés et parallèles.

Avantageusement, le conducteur composite comprend au moins une plaque de renfort mécanique.

Selon un second mode de réalisation, lesdits brins sont des fils cylindriques supraconducteurs.

De préférence, lesdits fils sont toronnés autour d'un cylindre support.

L'invention est décrite ci-après plus en détail à l'aide de figures ne représentant que des modes de réalisation préférés de l'invention.

La figure 1 est une vue en coupe transversale d'un premier mode de réalisation de l'invention.

La figure 2 est une vue en coupe transversale d'un second mode de réalisation de l'invention.

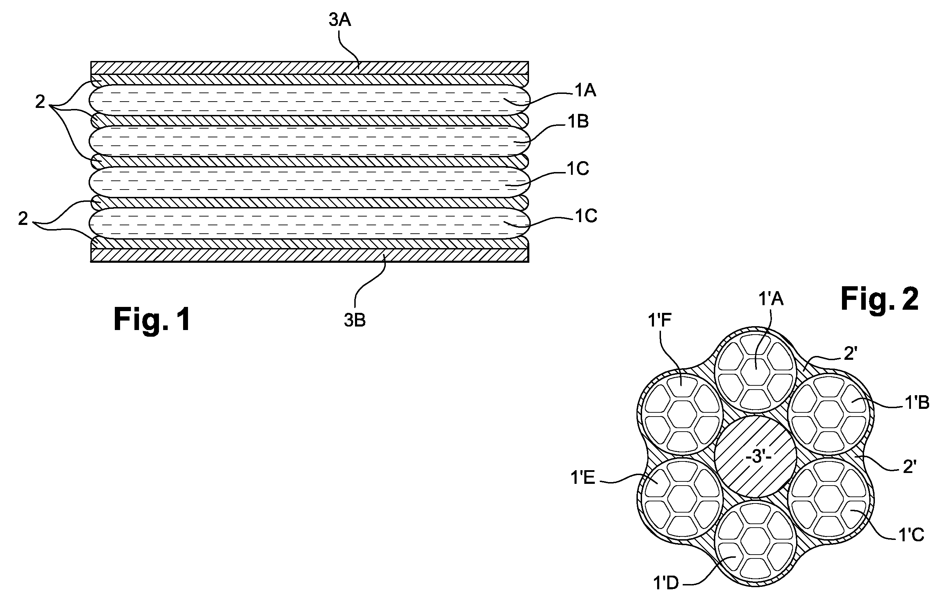

La figure 1 représente un conducteur composite à brins 1A à 1C multifilamentaires supraconducteurs en forme de rubans plats, assemblés les uns aux autres par une soudure 2 continue sur toute leur longueur, cette soudure 2 étant constituée d'un alliage à basse température de fusion. Selon un mode de réalisation préféré, les rubans 1 sont constitués de filaments de Bi2212 dans une matrice d'argent.

De préférence, cet alliage est un alliage d'étain. Un alliage de plomb, de bismuth ou d'indium peut également être utilisé.

Les rubans 1 sont assemblés, superposés et parallèles, et sont trempés dans un bain d'alliage, par exemple d'alliage d'étain, afin de réaliser cette soudure continue et obtenir un composite de type sandwich.

Une plaque de renfort mécanique 3A et 3B peut être également soudée, lors de ce trempage dans le bain d'alliage, sur les deux faces longitudinales du composite. Cette plaque 3 est métallique, par exemple en acier inoxydable ou alliage cuivreux.

La figure 2 un conducteur composite à brins 1'A à 1'F multifilamentaires supraconducteurs en forme de fils cylindriques, assemblés les uns aux autres par une soudure 2' continue sur toute leur longueur, cette soudure 2' étant constituée d'un alliage à basse température de fusion. Selon un mode de réalisation préféré, Les rubans 1' sont constitués de filaments de Bi2212 dans une matrice d'argent.

De préférence, cet alliage est un alliage d'étain. Un alliage de plomb, de bismuth ou d'indium peut également être utilisé.

Les fils 1' sont assemblés, toronnées autour d'un cylindre support 3' métallique, par exemple en acier inoxydable ou alliage cuivreux, et sont trempés dans un bain d'alliage, par exemple d'alliage d'étain, afin de réaliser cette soudure continue et obtenir un composite cylindrique.

Comme il apparaît clairement à la lumière de ces deux modes de réalisation préféré, le conducteur composite à brins multifilamentaires supraconducteurs conforme à l'invention est de section quatre à sept fois supérieure à celle d'un brin multifilamentaire seul, selon les exemples représentés. Surtout, il est de par sa forme et sa constitution de résistance mécanique bien supérieure.

Dans le cas de rubans multifilamentaires tel qu'illustré sur la figure 1, le rapport largeur sur épaisseur du conducteur composite est considérablement réduit et, de forme plus compacte, ce conducteur est plus résistant. Les plaques de renfort mécanique optimisent encore cette solidité.

Dans le cas de fils cylindriques comme illustré sur la figure 2, de la même façon, une structure compacte, solide et renforcée par le cylindre support est obtenue.

Il est donc plus aisé de manipuler ce conducteur composite lors de son bobinage dans le cadre de la fabrication d'une bobine magnétique, par exemple. De plus, ce bobinage peut être fabriqué plus rapidement, le nombre de tours étant réduit, par exemple de quatre à six fois selon les exemples représentés.

Une fois le conducteur composite en fonction, par exemple bobiné, en cas de défection d'un brin multifilamentaire, le courant est transmis grâce à la soudure à un brin adjacent, assurant le maintien du passage de courant global.

Bien entendu, l'invention n'est pas limitée aux modes de réalisation décrits et représentés, mais elle est susceptible de variantes accessibles à l'homme du métier sans que l'on s'écarte de l'invention. En particulier, on pourra, sans sortir du cadre de l'invention, remplacer le Bi2212 par tout autre matériau ayant les mêmes propriétés. La forme en coupe transversale des brins multifilamentaires peut donc être rectangulaire ou ronde comme représenté, mais également de forme différente telle que par exemple carré.

## Revendications

1. Conducteur composite à brins multifilamentaires supraconducteurs (1, 1') maintenus par soudure, **caractérisé en ce que** lesdits brins sont assemblés les uns aux autres par une soudure continue (2, 2') sur toute leur longueur, cette soudure étant constituée d'un alliage à basse température de fusion.

2. Conducteur selon la revendication 1, **caractérisé en ce que** ladite soudure (2, 2') est obtenue par passage desdits brins (1, 1') assemblés dans un bain d'alliage.

3. Conducteur selon l'une des revendications précédentes, **caractérisé en ce que** ledit alliage est un alliage d'étain.

4. Conducteur selon l'une des revendications précédentes, **caractérisé en ce que** lesdits brins (1, 1') sont constitués de filaments de Bi2212 dans une matrice d'argent.

5. Conducteur selon l'une des revendications précédentes, **caractérisé en ce que** lesdits brins sont des rubans plats supraconducteurs (1A à 1C).

6. Conducteur selon la revendication 3, **caractérisé en ce que** lesdits brins (1A à 1C), sont superposés et parallèles.

7. Conducteur selon la revendication 6 ou 6, **caractérisé en ce qu'**il comprend au moins une plaque de renfort mécanique (3A, 3B).

8. Conducteur selon l'une des revendications 1 à 3, **caractérisé en ce que** lesdits brins sont des fils cylindriques supraconducteurs (1'A à 1'F).

9. Conducteur selon la revendication précédente, **caractérisé en ce que** lesdits fils sont toronnés autour d'un cylindre support (3').
